# EUROPÄISCHE PATENTANMELDUNG

(11) **EP 2 876 398 A1**
(43) Veröffentlichungstag der Anmeldung: **27.05.2015**
(21) Anmeldenummer: 13194303.7
(22) Anmeldetag: 25.11.2013
(51) Int. Cl.: F27B 1/00, C04B 20/06, F27B 1/20, F27D 3/00, F27D 3/10

(54) **Vorrichtung und Verfahren zur Herstellung eines geblähten Granulats**

(71) Anmelder: Binder + Co Aktiengesellschaft, 8200 Gleisdorf (AT)
(72) Erfinder: Brunnmair, Ernst Erwin, Graz 8045 (AT)
(74) Vertreter: KLIMENT & HENHAPEL

(57) **Zusammenfassung**

Die Erfindung bezieht auf eine Vorrichtung (10) zur Herstellung eines geblähten Granulats aus sandkomförmigem Material (1), umfassend einen Ofen (2) mit einem im Wesentlichen vertikal verlaufenden Ofenschacht (3) und einer oberhalb oder im oberen Bereich des Ofenschachtes (3) angeordneten Aufgabeeinrichtung (5) zur Aufgabe des sandkomförmigen Materials (1) in den Ofenschacht (3).

Um ein gleichmäßige Aufblähen des sandkornförmigen Materials zu erreichen, ist die Aufgabeeinrichtung (8) ausgebildet, um das sandkomförmige Material (1) in Form zumindest eines nach unten fallenden Vorhanges in den oberen Bereich des Ofenschachtes (3) einzubringen, wobei die Fallstrecke (4) des Vorhanges in einem dezentralen, vorzugsweise peripheren Bereich des Ofenschachtquerschnittes liegt.

Die Erfindung bezieht sich auch auf ein Verfahren zur Herstellung eines geblähten Granulats aus sandkornförmigem, mineralischem Material.

## Beschreibung

### GEBIET DER ERFINDUNG

Die Erfindung bezieht sich auf eine Vorrichtung zur Herstellung eines geblähten Granulats aus sandkornförmigem Material, umfassend einen Ofen mit einem im Wesentlichen vertikal verlaufenden Ofenschacht und einer oberhalb oder im oberen Bereich des Ofenschachtes angeordneten Aufgabeeinrichtung zur Aufgabe des sandkornförmigen Materials in den Ofenschacht, sowie auf ein Verfahren zur Herstellung eines geblähten Granulats.

### STAND DER TECHNIK

Eine derartige Vorrichtung bzw. Verfahren ist in der WO 2013/053635 A1 offenbart, deren Aufgabe darin besteht, eine geschlossene Oberfläche des geblähten Granulats kontrollierbar einzustellen, sodass das geblähte Granulat keine bzw. kaum Hygroskopie aufweist. Außerdem soll die Möglichkeit geschaffen werden, die Oberflächenstruktur des geblähten Granulats und damit dessen Rauigkeit gezielt zu beeinflussen. Dazu schlägt diese Druckschrift vor, mehrere entlang der Fallstrecke des sandkornförmigen Materials angeordnete und unabhängig voneinander steuerbare Heizelemente vorzusehen und entlang der Fallstrecke eine Temperaturdetektion durchzuführen, wobei die Heizelemente unterhalb des Bereiches, in dem der Blähvorgang stattfindet, in Abhängigkeit der detektierten Temperatur gesteuert werden.

Auf Grund der vertikalen Ausrichtung des Expansionsschachtes und aufgrund der zusätzlichen Einbringung bzw. Absaugung von den Blähvorgang begleitenden Prozessgasen treten innerhalb des Schachtes Strömungen auf, die auf das sandkornförmige Material einwirken. Wäre der Schacht nach oben hin abgeschlossen, würden sich Strömungsverhältnisse einstellen, bei welchen in einigen Abschnitten des Expansionsschachtes eine wandnahe Aufwärtsströmung (Grenzschichtströmung) vollkommen zum Erliegen käme, was zwangsläufig zu einem Anbacken von Partikeln an der Wand des Expansionsschachtes führen würde, darüberhinaus auch zu unterschiedlichen Verweilzeiten der einzelnen Sandkörner im Schacht und so schlussendlich zu einer Blähqualität mit höchst unterschiedlichen Blähgraden der einzelnen Partikel führen würde.

Aber auch bislang bekannte Lösungen mit zusätzlicher Einbringung bzw. Absaugung von den Blähvorgang begleitenden Prozessgasen haben bislang keine hinreichend gleichmäßige Qualität der geblähten Partikel geliefert.

Als Nachteil des Standes der Technik ist somit der ungleichmäßige Blähvorgang zu sehen, der im Endergebnis zu unterschiedlich stark oder überhaupt nicht aufgeblähten Partikeln führt, sowie zu verstärkten Wandanbackungen Die Eigenschaften des Granulats im Hinblick auf Hygroskopie werden dadurch negativ beeinflusst, da eine Regelung des Blähvorganges nicht alle Partikel gleichermaßen erreicht.

Der Nachteil bei der Verwendung von bekannten Lösungen der Materialaufgabe, wie etwa mittels Zellradschleusen, Schurren oder Riffelwalzenaufgeber, wird im Folgenden näher erläutert. Mit einer üblichen Materialaufgabe in den Ofenschacht mittels Schurre, Zellradschleuse oder Riffelwalzenaufgaben lässt sich eine relativ gleichmäßige Materialverteilung über den Querschnitt des Expansionsschachtes erzielen. Auf Grund der über den Schachtquerschnitt variierenden Strömungsverhältnisse würde dies jedoch zu unterschiedlichen Verweilzeiten und damit zu unterschiedlicher Qualität des geblähten Granulats führen. Die Folge ist ein ungleichmäßig geblähtes Granulat und der mit der wandnahen Aufwärtsströmung zirkulierende Feinstaub würde zusätzlich zu Anbackungen im Schacht führen.

Die der vorliegenden Erfindung zugrundeliegende Aufgabenstellung besteht darin, eine Vorrichtung sowie ein Verfahren zur Herstellung eines geblähten Granulats aus sandkornförmigem Material bereitzustellen, die/das die beschriebenen Nachteile nicht aufweist und sich durch einen gleichmäßigen, auf alle Partikel gleichermaßen einwirkenden Blähvorgang auszeichnet. Mit einer solchen Vorrichtung bzw. Verfahren soll möglichst effizient verhindert werden, dass unterschiedlich stark aufgeblähte oder überhaupt nicht aufgeblähte Partikel im entstehenden Granulat vorkommen. Die Vorrichtung soll sich durch eine einfache und zuverlässige Konstruktion auszeichnen. Die Erfindung soll auf bestehenden Anlagen ohne viel Aufwand nachrüstbar sein.

### DARSTELLUNG DER ERFINDUNG

Dieses Ziel wird mit einer eingangs erwähnten Vorrichtung dadurch erreicht, dass die Aufgabeeinrichtung ausgebildet ist, um das sandkornförmige (d.h. rieselfähige) Material in Form zumindest eines nach unten fallenden Vorhanges in den oberen Bereich des Ofenschachtes einzubringen, wobei die Fallstrecke des Vorhanges in einem dezentralen, vorzugsweise peripheren Bereich des Ofenschachtquerschnittes liegt.

Die Erfindung basiert auf der grundlegenden Erkenntnis, dass die Art der Beschickung die Qualität des Blähvorganges wesentlich beeinflussen kann. Dezentral bedeutet hier, dass der Vorhang nicht im Zentrumsbereich des Ofenschachtquerschnittes verläuft, sondern in Richtung Innenwände des Ofenschachtes orientiert ist. Dies hat einerseits den Vorteil, dass im Zentrumsbereich Platz für eine erzwungene Sekundärströmung hergestellt wird, beispielsweise durch Einbringung bzw. Absaugung eines Prozessgases, z.B. heißer Luft, im Kopfbereich des Ofenschachtes, welche positive Auswirkungen auf in der wandnahen Aufwärtsströmung (rück)beförderte Partikel hat, in dem von der Sekundärströmung eine auf diese Partikel gerichtete Kraft in Richtung Ofenschachtzentrum ausgeübt wird, wodurch Anbackungen vermieden bzw. gegenüber bislang bekannten Verfahren drastisch reduziert werden können, anderseits wird dadurch die von den Innenwänden abstrahlende Wärme effizienter bzw. direkter auf das fallende Material übertragen. Bevorzugt in diesem Zusammenhang ist, wenn der Vorhang im peripheren, d.h. im unmittelbaren oder mittelbaren Randbereich des Ofenschachtquerschnittes verläuft. Unter dem Ofenschachtquerschnitt wird selbstverständlich der Querschnitt normal zur Vertikalen bzw. zur Längserstreckung des Ofenschachtes verstanden.

Bevorzugt ist somit die Aufgabeeinrichtung zumindest im Zentrumsbereich des Ofenschachtquerschnittes frei von Austrittsöffnungen für das sandkornförmige Material, sodass der Ofenschacht in seinem Zentrumsbereich nicht mit sandkornförmigem Material beschickt wird. Besonders bevorzugt ist, wenn die Aufgabevorrichtung außer im peripheren Bereich des Ofenschachtquerschnittes frei von Austrittsöffnungen für das sandkornförmige Material ist, sodass eine Beschickung nur im innenwandnahen Bereich erfolgt.

Eine bevorzugte Ausführungsform zeichnet sich dadurch aus, dass die Anzahl der Vorhänge höchstens so groß ist wie die Anzahl der Innenwände des Ofenschachtes, wobei jeder Innenwand des Ofenschachtes höchstens ein Vorhang zugeordnet ist. Dies ermöglicht eine Beheizung aller Materialvorhänge in gleichem Ausmaß.

Der Vorteil der Erfindung liegt auch darin, dass durch die Ausbildung eines vertikal stehenden Vorhanges (d.h. die Ebene des Vorhanges ist parallel zur Vertikalen) aus sandkornförmigem Material eine gezielt über den Schachtquerschnitt verteilte Beschickung ermöglicht wird. D.h. der Aufgabequerschnitt des Materials im oberen Bereich des Ofens ist sehr viel kleiner als der Ofenschachtquerschnitt. Im Gegensatz zum Stand der Technik bedeutet dies, dass nicht mehr der gesamte Schachtquerschnitt gleichmäßig beschickt wird, sondern nur noch bestimmte Abschnitte des Schachtquerschnitts eine Fallstrecke definieren. Je nach Dimensionierung der einzelnen Komponenten der Vorrichtung sowie der Strömungsverhältnisse im Ofenschacht kann die Lage der flächigen Vorhänge so gewählt bzw. eingestellt werden, dass die innerhalb des Vorhanges fallenden Partikel einer gleichen Strömung ausgesetzt sind. Dadurch kann die gleichmäßige Verweilzeit der Partikel im Schacht und folglich eine gleichförmige Blähqualität des Granulates sichergestellt werden. Der Anteil an schlecht geblähten Sandpartikel wird wesentlich reduziert, was zu einer Steigerung der Materialausbeute führt.

Bezüglich des verwendeten Materials können nicht nur mineralische Sande verwendet werden, in denen Wasser als Treibmittel gebunden ist, wie beispielsweise Perlit oder Obsidiansand . Ebenso kann es sich um mineralischen Staub handeln, der mit wasserhaltigem mineralischem Bindemittel gemischt ist, wobei in diesem Fall das wasserhaltige mineralische Bindemittel als Treibmittel wirkt. Der Blähvorgang kann in diesem Fall folgendermaßen vor sich gehen: Der mineralische Staub, der aus relativ kleinen Sandkörnern von beispielsweise 20 pm Durchmesser besteht, bildet mit dem Bindemittel größere Körner von beispielsweise 500 pm. Bei einer kritischen Temperatur werden die Oberflächen der Sandkörner des mineralischen Staubs plastisch und bilden geschlossene Oberflächen der größeren Körner bzw. verschmelzen zu solchen. Da die geschlossene Oberfläche eines einzelnen größeren Korns in der Regel insgesamt kleiner ist als die Summe aller Oberflächen der einzelnen Sandkörner des mineralischen Staubs, welche an der Bildung dieses größeren Korns beteiligt sind, wird auf diese Weise Oberflächenenergie gewonnen bzw. nimmt das Verhältnis von Oberfläche zu Volumen ab. In diesem Moment liegen also größere Körner mit jeweils einer geschlossenen Oberfläche vor, wobei die Körner eine Matrix aus mineralischem Sandstaub sowie wasserhaltiges mineralisches Bindemittel aufweisen. Da die Oberflächen dieser größeren Körner nach wie vor plastisch sind, kann in der Folge der sich ausbildende Wasserdampf die größeren Körner blähen. D.h. das wasserhaltige mineralische Bindemittel wird als Treibmittel verwendet. Alternativ kann auch mineralischer Staub mit einem Treibmittel gemischt werden, wobei das Treibmittel mit mineralischem Bindemittel, welches vorzugsweise Wasser enthält, vermengt ist. Als Treibmittel kann beispielsweise CaCO₃ Verwendung finden. Der Blähvorgang kann in diesem Fall analog zum oben geschilderten vor sich gehen: Der mineralische Staub, welcher eine relativ kleine Sandkorngröße (beispielsweise 20 pm Durchmesser) aufweist, bildet mit dem Treibmittel und dem mineralischen Bindemittel größere Körner (beispielsweise 500 pm Durchmesser). Bei Erreichen einer kritischen Temperatur werden die Oberflächen der Sandkörner des mineralischen Staubs plastisch und bilden eine geschlossene Oberfläche der größeren Körner bzw. verschmelzen zu einer solchen. Die geschlossenen Oberflächen der größeren Körner sind nach wie vor plastisch und können nun vom Treibmittel gebläht werden. Falls das mineralische Bindemittel wasserhaltig ist, kann dieses als zusätzliches Treibmittel fungieren. Daher ist es bei einer bevorzugten Ausführungsform des erfindungsgemäßen Verfahrens vorgesehen, dass es sich bei dem mineralischem Material mit Treibmittel um mineralisches Material handelt, in dem Wasser gebunden ist und als Treibmittel wirkt, oder um mineralischen Staub gemischt mit wasserhaltigem mineralischen Bindemittel, welches als Treibmittel wirkt, oder um mineralischen Staub gemischt mit einem Treibmittel, welches mit mineralischem Bindemittel vermengt ist, wobei das mineralische Bindemittel vorzugsweise Wasser beinhaltet und als zusätzliches Treibmittel wirkt. Um das dargestellte Verfahren möglichst effizient durchführen zu können, ist es bevorzugt neben einem Schachtofen mehrere Heizzonen mit (unabhängig voneinander) regelbaren Heizelementen sowie eine intelligente Regel- und Steuereinheit vorzusehen. Dies steuert die Heizelemente bevorzugt in Abhängigkeit von gemessenen Temperaturen entlang des Ofenschachtes.

Die erfindungsgemäße Vorrichtung bzw. Verfahren kann beispielsweise wie in der WO 2013/053635 A1 ausgebildet sein. Deren Offenbarung wird daher zur Gänze in diese Beschreibung aufgenommen.

Eine bevorzugte Ausführung zeichnet sich dadurch aus, dass die Aufgabeeinrichtung zumindest eine dem Ofenschacht zugewandte spaltförmige Austrittsöffnung und/oder zumindest eine dem Ofenschacht zugewandte Austrittsöffnungsanordnung aus mehreren entlang einer Linie nebeneinander angeordneten Austrittsöffnungen aufweist, um das sandkornförmige Material in Form eines Vorhanges in den Ofenschacht zu entlassen. Die spaltförmige Austrittsöffnung ist jeweils länglich und schmal. Dadurch werden dünne, linienförmigen Querschnitt aufweisende Fallvorhänge realisiert, wobei auch der Wärmeeintrag in das den Vorhang bildende Material gleichmäßig verteilt ist. Der Linienquerschnitt der Vorhänge muss nicht gerade sein, sondern kann auch gekrümmte, insbesondere kreislinienförmige Kontur besitzen. Vorzugsweise sind die Linienquerschnitte des/der Vorhänge(s) an die Kontur zumindest einer Innenwand des Ofenschachtes angepasst. Die Breite eines Vorhanges entspricht vorzugsweise der Breite einer Innenwand des Ofenschachtes.

Eine bevorzugte Ausführung zeichnet sich dadurch aus, dass die spaltförmige Austrittsöffnung oder die Austrittsöffnungsanordnung im Wesentlichen parallel zu zumindest einer Innenwand des Ofenschachtes verläuft. Die von der Innenwand abstrahlende Wärme erreicht somit jede Stelle des Vorhanges gleichermaßen, wodurch die Gleichmäßigkeit des Blähvorganges zusätzlich gefördert wird.

Eine bevorzugte Ausführung zeichnet sich dadurch aus, dass die spaltförmige Austrittsöffnung oder die Austrittsöffnungsanordnung in Bezug zu einer Innenwand des Ofenschachtes derart angeordnet ist, dass die Fallstrecke des durch die spaltförmige Austrittsöffnung oder die Austrittsöffnungsanordnung geformten Vorhanges in Innenwandnähe verläuft, wobei die Fallstrecke des Vorhanges vorzugsweise höchstens 30mm, besonders bevorzugt höchstens 20mm von der Innenwand des Ofenschachtes entfernt, verläuft. Dies gewährleistet einen zuverlässigen Blähvorgang und ermöglicht aufgrund der Nähe des fallenden Vorhanges zu den Heizelementen in der Innenwand des Ofenschachtes eine Energieeinsparung.

Eine bevorzugte Ausführung zeichnet sich dadurch aus, dass die Aufgabeeinrichtung zumindest eine Leitfläche für das sandkornförmige Material umfasst, die schräg zur Vertikalen orientiert ist und in eine dem Ofenschacht zugewandte Austrittsöffnung oder Austrittsöffnungsanordnung mündet, wobei vorzugsweise die Aufgabeeinrichtung zumindest zwei Leitflächen umfasst, die das sandkornförmige Material in entgegengesetzte Richtungen umlenken. Dies ermöglicht eine gezielte Führung der Partikel und die Bildung eines gleichmäßigen Fallvorhanges im Ofenschacht.

Eine bevorzugte Ausführung zeichnet sich dadurch aus, dass die Aufgabeeinrichtung eine erste Förderstrecke mit einem Boden aufweist, um das sandkornförmige Material entlang einer ersten Förderrichtung zu fördern, wobei der Boden im Endbereich der ersten Förderstrecke durch schräg oder gebogen zur ersten Förderrichtung verlaufende und jeweils einen Überlauf bildende Ränder begrenzt ist, an denen das sandkornförmige Material die erste Förderstrecke jeweils als fallender Vorhang nach unten verlässt. Durch diese Maßnahme können mit einfachsten Mitteln Vorhänge in unterschiedlichen Ebenen gebildet werden.

Eine bevorzugte Ausführung zeichnet sich dadurch aus, dass sich die Bodenfläche im Endbereich der ersten Förderstrecke in Förderrichtung verjüngt, vorzugsweise spitz zuläuft. Eine bevorzugte Ausführung zeichnet sich dadurch aus, dass der Boden im Endbereich der ersten Förderstrecke einen Einschnitt aufweist, der durch die den Überlauf bildenden Ränder begrenzt ist und vorzugsweise V-förmige Kontur (z.B. Schwalbenschwanzschlitzung) aufweist. Dadurch ergibt sich eine zweigeteilte Linienaufgabe.

Der Boden der ersten Förderstrecke kann gerillt ausgeführt sein, sodass die Verteilung der Körner in kleinen Kanälen erfolgt. Außerdem kann eine Zuführung zumindest einer weiteren Körnung im Bereich der Vergleichmäßigung des Materialstroms über die Breite erfolgen. Eine bevorzugte Ausführung zeichnet sich dadurch aus, dass die erste Förderstrecke als Rinne ausgebildet ist und/oder mit einem Vibrationsantrieb verbunden ist. Die Rinne verhindert dass seitliche Entweichen des Partikelstaubes. Die Vibrationseinrichtung sorgt für eine gleichmäßige Verteilung des Materials quer zur Förderrichtung und trägt somit zur Entstehung eines gleichmäßigen Vorhanges (konstanter Dicke) bei.

Eine bevorzugte Ausführung zeichnet sich dadurch aus, dass der ersten Förderstrecke eine Dosiereinrichtung, insbesondere in Form eines Ventils, zur Dosierung der Zufuhr des sandkornförmigen Materials vorgeschaltet ist. Dies ermöglicht eine Optimierung der Dichte der in dem Vorhang fallenden Partikel.

Eine bevorzugte Ausführung zeichnet sich dadurch aus, dass die Aufgabeeinrichtung eine zweite Förderstrecke aufweist, die unterhalb der ersten Förderstrecke angeordnet ist und eine Umlenkeinrichtung umfasst, um die Ebene zumindest eines der von den Rändern der ersten Förderstrecke fallenden Vorhänge zu drehen. Auf diese Weise kann die Ebene der Vorhänge optimal an die Kontur der Innenwände des Ofenschachtes angepasst werden. Außerdem sorgt die Umlenkeinrichtung für eine weitere Homogenisierung des fallenden Materialvorhanges. Je nach Ofenschachtquerschnitt kann die Umlenkeinrichtung z.B. als Prisma, Pyramide oder Kegel(Stumpf) gebildet sein und vorzugsweise einen von oben nach unten zunehmenden Querschnitt aufweisen.

Eine bevorzugte Ausführung zeichnet sich dadurch aus, dass die Umlenkeinrichtung zumindest eine Leitfläche ausbildet, die schräg zur Fallrichtung eines von den Rändern der ersten Förderstrecke fallenden Vorhanges orientiert ist.

Eine bevorzugte Ausführung zeichnet sich dadurch aus, dass eine erste Leitfläche der Umlenkeinrichtung unterhalb eines ersten schräg verlaufenden Randes der ersten Förderstrecke angeordnet ist und in eine erste spaltförmige Austrittsöffnung oder Austrittsöffnungsanordnung mündet, und dass eine zweite Leitfläche der Umlenkeinrichtung unterhalb eines zweiten schräg verlaufenden Randes der ersten Förderstrecke angeordnet ist und in eine zweite spaltförmige Austrittsöffnung oder Austrittsöffnungsanordnung mündet. Auf diese Weise können zwei voneinander unabhängige bzw. räumlich getrennte Vorhänge in den Ofenschacht eingebracht werden, die dann entlang zweier verschiedener Innenwände herabfallen.

Eine bevorzugte Ausführung zeichnet sich dadurch aus, dass der Ofenschachtquerschnitt im Wesentlichen rechteckförmig ist und durch die Aufgabeeinrichtung eine erste Fallstrecke in Form eines Vorhanges entlang einer ersten Innenwand des Ofenschachtes definiert ist und eine zweite Fallstrecke in Form eines Vorhanges entlang einer zweiten Innenwand des Ofenschachtes definiert ist, wobei vorzugsweise die erste Innenwand und die zweite Innenwand einander gegenüberliegen. Die beiden solcherart eingebrachten Vorhänge aus sandkornförmigem Material sind denselben Bedingungen ausgesetzt, wodurch ein optimaler Blähvorgang erreicht wird.

Eine bevorzugte Ausführung zeichnet sich dadurch aus, dass die Aufgabeeinrichtung einen in den Ofenschacht mündenden Kanal zur Einbringung oder Absaugung eines Prozessgases in/aus dem Ofenschacht umfasst.

Eine bevorzugte Ausführung zeichnet sich dadurch aus, dass der Kanal in oder unterhalb der Umlenkeinrichtung ausgebildet ist. Dies ermöglicht nicht nur platzsparendes Design, sondern erlaubt auch eine Vorwärmung der Partikel durch das Prozessgas, das die Umlenkeinrichtung erwärmt.

Eine bevorzugte Ausführung zeichnet sich dadurch aus, dass die Einmündung des Kanals in den Ofenschacht in einem Bereich zwischen zwei durch die Aufgabeeinrichtung definierte und einander gegenüberliegenden Fallstrecken angeordnet ist. Dadurch ist die Einbringung des Prozessgasstromes von den Fallstrecken räumlich getrennt. Außerdem wirkt das Prozessgas auf beide Fallstrecken gleichermaßen.

Eine bevorzugte Ausführung zeichnet sich dadurch aus, dass die Einmündung des Kanals in den Ofenschacht dem Zentrum des Ofenschachtquerschnitts näher ist als die zumindest eine spaltförmige Austrittsöffnung oder die zumindest eine Austrittsöffnungsanordnung.

Eine bevorzugte Ausführung zeichnet sich dadurch aus, dass eine Einmündung des Kanals in den Ofenschacht im Zentrumsbereich des Ofenschachtquerschnittes angeordnet ist. Die Zentrumsnähe der Einmündung führt zu dem bereits erwähnten Effekt, dass die in Innenwandnähe verlaufenden Fallstrecken nicht negativ durch die Prozessgasströmung beeinflusst werden.

Das Ziel wird auch mit einem Verfahren zur Herstellung eines geblähten Granulats aus sandkornförmigem Material, insbesondere mineralischem Material mit einem Treibmittel, beispielsweise aus Perlit- oder Obsidiansand, erreicht, wobei das Material über eine Aufgabeeinrichtung von oben in einen Ofen mit einem im Wesentlichen vertikal verlaufenden Ofenschacht eingebracht wird und entlang zumindest einer Fallstrecke durch den Ofenschacht fällt, wobei das Material erhitzt und aufgrund des Treibmittels gebläht wird. Dabei wird das sandkornförmige Material durch die Aufgabeeinrichtung in Form zumindest eines nach unten fallenden Vorhanges in den oberen Bereich des Ofenschachtes eingebracht, wobei die Fallstrecke des Vorhanges in einem dezentralen, vorzugsweise peripheren Bereich des Ofenschachtquerschnittes liegt.

Eine bevorzugte Ausführung zeichnet sich dadurch aus, dass die Fallstrecke entlang einer Innenwand des Ofenschachtes verläuft, wobei vorzugsweise der Abstand zwischen dem Vorhang aus sandkornförmigem Material und der Innenwand höchstens 30mm, besonders bevorzugt höchstens 20mm, beträgt.

Eine bevorzugte Ausführung zeichnet sich dadurch aus, dass im oberen Bereich des Ofenschachtes Prozessgas eingebracht oder abgesaugt wird, wobei die Einbringung oder Absaugung des Prozessgases in einem zentrumsnahen Bereich des Ofenschachtquerschnittes erfolgt.

Eine bevorzugte Ausführung zeichnet sich dadurch aus, dass die Aufgabeeinrichtung nach einer der oben beschriebenen Ausführungen ausgebildet ist.

Im Folgenden wird noch eine bevorzugte Ausführungsform der Geräteausführung beschrieben.

Das Kernequipment des erfindungsgemäßen Verfahrens wird durch einen rechteckig ausgeführten Expansionsschacht, der von außen beheizt ist, gebildet. Die Energieübertragung auf die fallenden Partikel erfolgt vorzugsweise durch eine elektrische Widerstandsheizung mittels Strahlung.

Die mengenmäßige Dosierung des Materials kann/soll nach wie vor mit handelsüblichen Dosiereinrichtungen, wie Zellradschleuse, Dosierschnecke, Riffelwalzenaufgeber u.dgl., erfolgen. Dieser so festgelegte Massenstrom wird mittels einer speziell ausgeführten Beschickungsrinne (erste Förderstrecke) vorerst gleichmäßig über die Breite verteilt (z.B. mittels Vibrationsantrieb) und anschließend in zwei gleichmäßige Teile aufgeteilt. Dabei werden zwei Materialvorhänge gebildet, die ähnlich einem Wasserfall über die schrägen Ränder der ersten Förderstrecke geführt werden. Anschließend werden die so erzeugten Materialvorhänge in eine parallele Ausrichtung mit zwei gegenüberliegenden Innenwänden des Ofenschachtes gedreht und in den Ofenschacht aufgegeben. Ziel dabei ist, die zwei Materialvorhänge möglichst wandnah (z.B. 10 bis 15 mm von der Wand entfernt) in den Schacht aufzugeben. Durch diese Form der Aufgabe wird erreicht, dass das Material im Bereich der aufwärtsströmenden Grenzschicht aufgeben wird. Mit dieser Maßnahme und Absaugung von heißer Luft im Bereich zwischen den beiden wandnahmen Linienaufgaben des Materials (d.h. Vorhänge) wird eine relativ gleichmäßige Verweilzeit der Materialpartikel im Ofenschacht gewährleistet. Dabei kann die Absaugmenge zwischen den linienförmigen Materialaufgaben (d.h. Vorhänge) in Abhängigkeit der aufgegebenen Korngrößen eingestellt bzw. geregelt werden.

### KURZE BESCHREIBUNG DER FIGUREN

Im Folgenden werden bevorzugte Ausführungsformen der Erfindung anhand der Zeichnung näher beschrieben. Dabei zeigt
Fig. 1 eine erfindungsgemäße Vorrichtung zur Herstellung eines geblähten Granulats aus sandkornförmigem Material,
Fig. 2 eine erste Förderstrecke der Aufgabeeinrichtung von der Seite,
Fig. 3 eine erste Förderstrecke von oben,
Fig. 4 eine Variante der ersten Förderstrecke von oben,
Fig. 5 die Abfolge des Förderweges innerhalb der Aufgabeeinrichtung mit drei unterschiedlichen Schnitten,
Fig. 6 eine Variante der Erfindung mit einer Austrittsöffnungsanordnung aus mehreren Austrittsöffnungen,
Fig. 7 einen Ofen mit rechteckigem Ofenschachtquerschnitt im Schnitt, und
Fig. 8 eine Variante der Erfindung mit kreisförmigem Ofenschachtquerschnitt.

### WEGE ZUR AUSFÜHRUNG DER ERFINDUNG

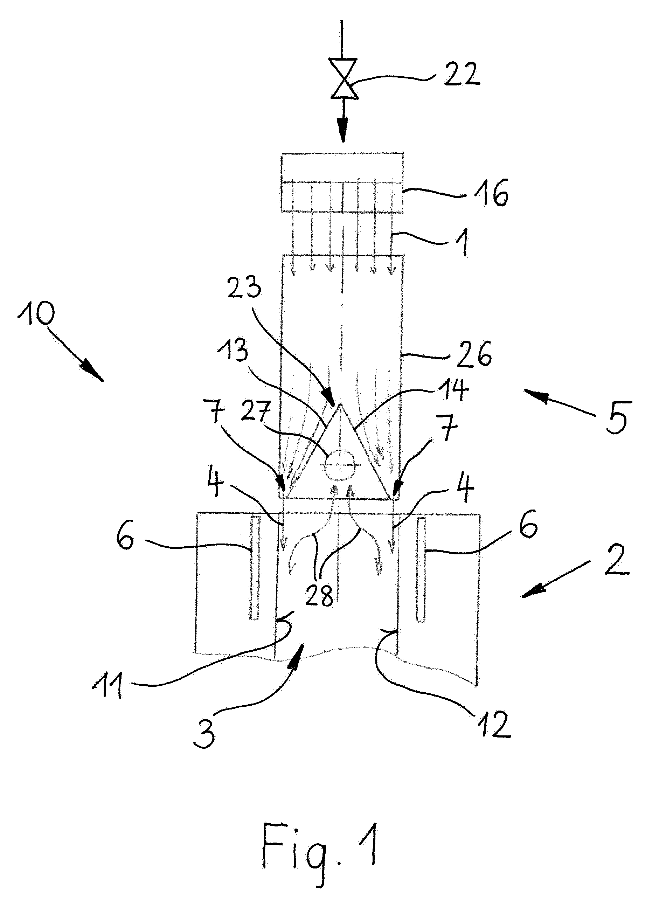

Fig. 1 zeigt eine Vorrichtung 10 zur Herstellung eines geblähten Granulats aus sandkornförmigem Material 1, umfassend einen Ofen 2 mit einem im Wesentlichen vertikal verlaufenden Ofenschacht 3 und einer oberhalb bzw. im oberen Bereich des Ofenschachtes 3 angeordneten Aufgabeeinrichtung 5 zur Aufgabe des sandkornförmigen Materials 1 in den Ofenschacht 3.

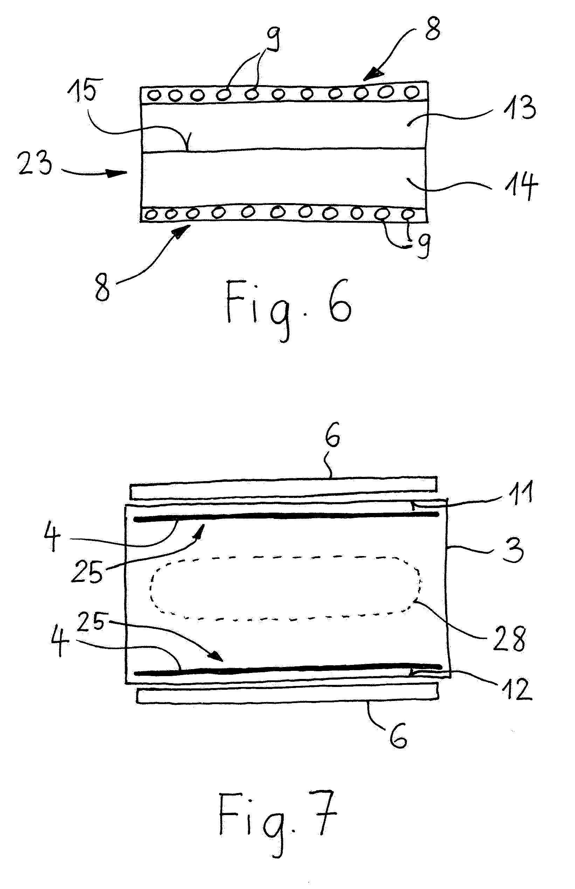

Die Aufgabeeinrichtung 5 ist ausgebildet, um das sandkornförmige Material 1 in Form zumindest eines nach unten fallenden Vorhanges 25 in den oberen Bereich des Ofenschachtes 3 einzubringen (Fig. 7), wobei die Fallstrecke 4 des Vorhanges 25 in einem dezentralen (hier sogar: peripheren) Bereich des Ofenschachtquerschnittes liegt.

Die Aufgabeeinrichtung 5 aus Fig. 1 weist zwei dem Ofenschacht 3 zugewandte längliche spaltförmige Austrittsöffnungen 7 auf, um das sandkornförmige Material 1 in Form eines Vorhanges 25 in den Ofenschacht 3 zu entlassen (Fig. 7).

Anstelle einer länglichen spaltförmigen Austrittsöffnung könnte auch eine Austrittsöffnungsanordnung 8 aus mehreren entlang einer Linie nebeneinander angeordneten Austrittsöffnungen 9 verwendet werden. Eine derartige Ausführungsform ist in einer Ansicht von oben in Fig. 6 dargestellt.

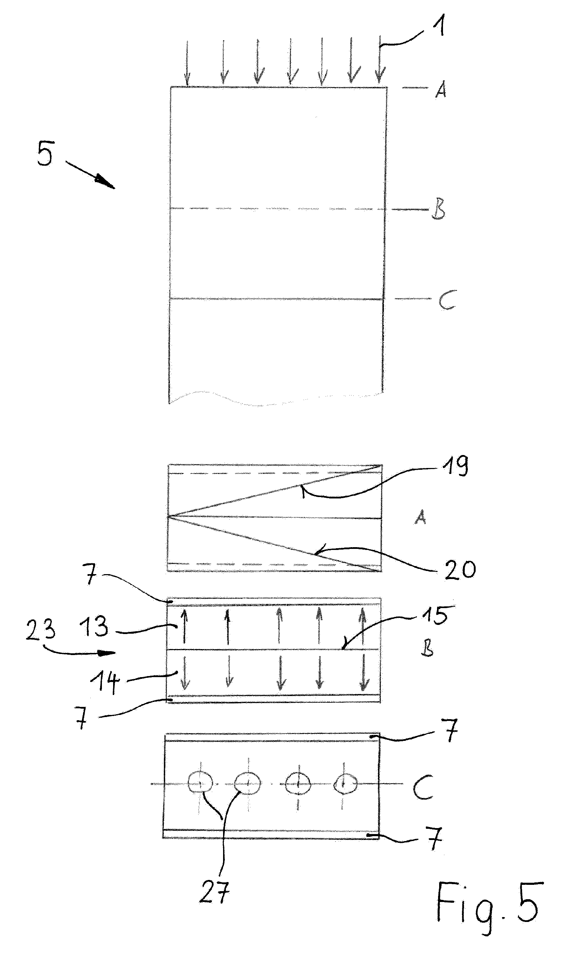

Die spaltförmigen Austrittsöffnungen 7 (Fig. 1 und 5) oder die Austrittsöffnungsanordnungen 8 (Fig. 6) verlaufen im Wesentlichen parallel zu den einander gegenüberliegenden Innenwänden 11, 12 des Ofenschachtes 3.

Die spaltförmigen Austrittsöffnungen 7 oder die Austrittsöffnungsanordnungen 8 sind vorzugsweise in Bezug zu den Innenwänden 11, 12 des Ofenschachtes 3 derart angeordnet, dass die Fallstrecke 4 des durch die spaltförmige Austrittsöffnung 7 oder die Austrittsöffnungsanordnung 8 geformten Vorhanges 25 in Innenwandnähe verläuft. Vorzugsweise verläuft die Fallstrecke 4 des Vorhanges 25 höchstens 30mm, besonders bevorzugt höchstens 20mm von der Innenwand 11, 12 des Ofenschachtes 3 entfernt.

Fig. 1 zeigt weiters noch die (elektrischen) Heizelemente 6 in den Wänden des Ofenschachtes 3 zur Erhitzung der Partikel über eine kritische Temperatur, sowie die Zufuhr bzw. Absaugung von Prozessgas 28 durch einen Kanal 27 im Zentrumsbereich des Schachtes 3.

Die Aufgabeeinrichtung 5 umfasst zumindest eine Leitfläche 13, 14 für das sandkornförmige Material 1, die schräg zur Vertikalen orientiert ist und in eine dem Ofenschacht 3 zugewandte Austrittsöffnung 7 oder Austrittsöffnungsanordnung 8 mündet. In der dargestellten Ausführungsform umfasst die Aufgabeeinrichtung 5 zwei Leitflächen 13, 14, die das sandkornförmige Material 1 in entgegengesetzte Richtungen, d.h. nach außen, umlenken.

Die Aufgabeeinrichtung 5 umfasst eine erste Förderstrecke 16, in der das Material 1 entlang einer Rinne gefördert wird, und eine zweite Förderstrecke 26, in der das Material 1 allein durch die Schwerkraft angetrieben wird.

Die Aufgabeeinrichtung 5 weist in den dargestellten Ausführungsformen (Fig. 1-4) eine erste Förderstrecke 16 mit einem Boden 17 auf, um das sandkornförmige Material 1 entlang einer ersten Förderrichtung 18 zu fördern. Der Boden 17 ist im Endbereich der ersten Förderstrecke 16 durch schräg (alternativ: gebogen) zur ersten Förderrichtung 18 verlaufende und jeweils einen Überlauf bildende Ränder 19, 20 begrenzt, an denen das sandkornförmige Material 1 die erste Förderstrecke 16 jeweils als fallender Vorhang 24 nach unten verlässt.

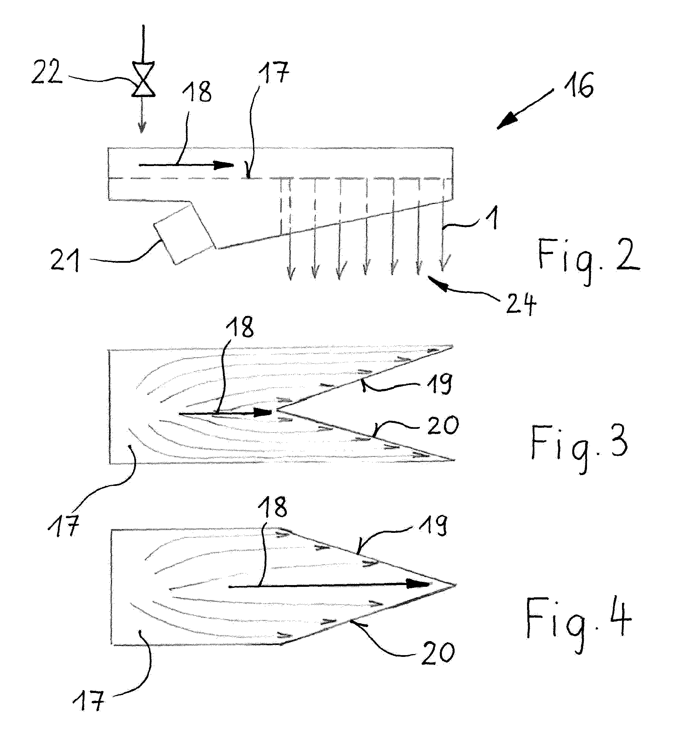

In der in Fig. 4 gezeigten Ausführung verjüngt sich die Bodenfläche im Endbereich der ersten Förderstrecke 16 in Förderrichtung 18 und läuft spitz zu.

In der in Fig. 3 gezeigten Ausführung weist der Boden 17 im Endbereich der ersten Förderstrecke 16 einen Einschnitt auf, der durch die den Überlauf bildenden Ränder 19, 20 begrenzt ist und V-förmige Kontur aufweist.

Der an den Rändern 19, 20 überlaufende Materialstrom bildet zwei zueinander geneigte Fallebenen, die jeweils einen Vorhang 24 bilden (vertikal nach unten verlaufende Pfeile in Fig. 2).

Die erste Förderstrecke 16 ist als Rinne ausgebildet und mit einem Vibrationsantrieb 21 verbunden. Der ersten Förderstrecke 16 ist eine Dosiereinrichtung 22, insbesondere in Form eines Ventils, zur Dosierung der Zufuhr des sandkornförmigen Materials 1 vorgeschaltet (Fig. 1 und 2).

Wie aus Fig. 1 ersichtlich weist die Aufgabeeinrichtung 5 eine zweite Förderstrecke 26 auf, die unterhalb der ersten Förderstrecke 16 angeordnet ist und eine Umlenkeinrichtung 23 umfasst, um die Ebenen der von den Rändern 19, 20 der ersten Förderstrecke 16 fallenden Vorhänge 24 zu drehen.

Dazu bildet die Umlenkeinrichtung 23 zwei seitlich nach entgegengesetzten Richtungen abfallende Leitflächen 13, 14 aus, die schräg zur Fallrichtung der Vorhänge 24 orientiert sind. Eine erste Leitfläche 13 der Umlenkeinrichtung 23 ist dabei unterhalb eines ersten schräg verlaufenden Randes 19 der ersten Förderstrecke 16 angeordnet und mündet in eine erste Austrittsöffnung 7. Eine zweite Leitfläche 14 der Umlenkeinrichtung 23 ist unterhalb eines zweiten schräg verlaufenden Randes 20 der ersten Förderstrecke 16 angeordnet und mündet in eine zweite Austrittsöffnung 7.

Diesen Zusammenhang verdeutlicht Fig. 5 die in ihrem oberen Teil die vertikale Abfolge des gesamten Förderweges darstellt und anhand von Schnitten A, B und C die einzelnen Funktionselemente näher darstellt. Ganz oben (Schnitt A) ist die erste Förderstrecke 16 mit den schrägen Rändern 19, 20. Darunter ist bereits die Umlenkeinrichtung 23 mit ihren geneigten Leitflächen 13, 14 zu sehen, die eine gemeinsame obere Längskante 15 ausbilden. Ganz unten (Schnitt C) sind die schlitzförmigen Austrittsöffnungen 7 sowie der sich in mehrere Öffnungen aufteilende Kanal 27 für das Prozessgas 28 zu sehen. Die Pfeile verdeutlichen den Materialstrom.

Der Ofenschachtquerschnitt ist in der in Fig. 7 gezeigten Ausführung im Wesentlichen rechteckförmig. Durch die Aufgabeeinrichtung 5 ist eine erste Fallstrecke 4 in Form eines Vorhanges 25 entlang einer ersten Innenwand 11 des Ofenschachtes 3 und eine zweite Fallstrecke 4 in Form eines weiteren Vorhanges 25 entlang einer zweiten Innenwand 12 des Ofenschachtes 3 definiert. Die erste Innenwand 11 und die zweite Innenwand 12 liegen einander gegenüber. Es ist selbstverständlich denkbar, dass entlang aller vier Innenwände des Ofenschachtes 3 Materialvorhänge nach unten fallen.

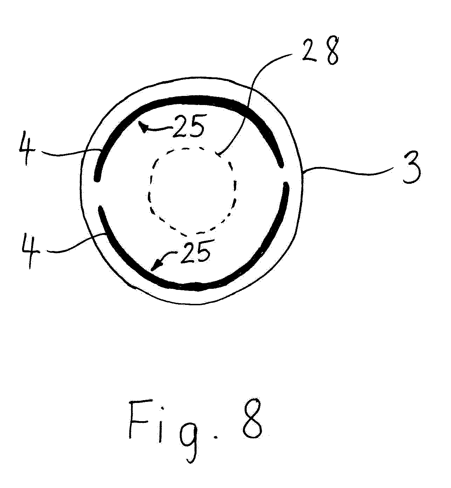

Fig. 8 zeigt eine alternative Ausführungsform, bei der der Ofenschachtquerschnitt kreisförmig ist und die Kontur der Fallvorhänge 25 (bzw. die Kontur der Austrittsöffnungen) an die kreisförmige Kontur der Innenwand angepasst ist.

Die Aufgabeeinrichtung 5 umfasst weiters einen in den Ofenschacht 3 mündenden Kanal 27 zur Einbringung oder Absaugung eines Prozessgases 28 in/aus dem Ofenschacht 3. In der dargestellten bevorzugten Ausführungsform (Fig. 1 und 5) ist der Kanal 27, z.B. als Bohrung, in der Umlenkeinrichtung 23 ausgebildet.

Die Einmündung des Kanals 27 in den Ofenschacht 3 ist in einem Bereich zwischen den beiden durch die Aufgabeeinrichtung 5 definierten und einander gegenüberliegenden Fallstrecken 4 angeordnet (Fig. 1 und 5).

In Fig. 8 erfolgt die Einmündung des Kanals 27 in den Ofenschacht 3 im Zentrumsbereich des Ofenschachtquerschnittes (angedeutet durch die strichlierte Kreislinie des Prozessgases 28). Jedenfalls ist in beiden Ausführungen die Einmündung des Kanals 27 in den Ofenschacht 3 dem Zentrum des Ofenschachtquerschnitts näher als die zumindest eine spaltförmige Austrittsöffnung 7 oder die zumindest eine Austrittsöffnungsanordnung 8.

Das Verfahren zur Herstellung eines geblähten Granulats aus sandkornförmigem, insbesondere mineralischem Material 1 mit einem Treibmittel, beispielsweise aus Perlit- oder Obsidiansand, erfolgt derart, dass das Material 1 über die Aufgabeeinrichtung 5 von oben in einen Ofen 2 mit dem im Wesentlichen vertikal verlaufenden Ofenschacht 3 eingebracht wird und entlang zumindest einer Fallstrecke 4 durch den Ofenschacht 3 fällt. Dabei wird das Material 1 durch in der Wand des Ofenschachtes sitzende Heizelemente 6 erhitzt (Fig. 1 und 7) und aufgrund des Treibmittels gebläht. Erfindungsgemäß wird nun das sandkornförmige Material 1 durch die Aufgabeeinrichtung 5 in Form zumindest eines nach unten fallenden Vorhanges 25 in den oberen Bereich des Ofenschachtes 3 eingebracht, wobei die Fallstrecke 4 des Vorhanges 25 in einem dezentralen, vorzugsweise peripheren Bereich des Ofenschachtquerschnittes liegt.

Die Fallstrecke 4 verläuft entlang einer Innenwand 11, 12 des Ofenschachtes 3, wobei vorzugsweise der Abstand zwischen dem Vorhang 25 aus sandkornförmigem Material 1 und der Innenwand 11, 12 höchstens 30mm, besonders bevorzugt höchstens 20mm, beträgt.
Im oberen Bereich des Ofenschachtes 3 wird Prozessgas 28, z.B. heiße Luft, eingebracht oder abgesaugt, wobei die Einbringung oder Absaugung des Prozessgases 28 in einem zentrumsnahen Bereich des Ofenschachtquerschnittes erfolgt.

Die Erfindung ist nicht auf die beschriebene Ausführungsformen und die darin hervorgehobenen Aspekte beschränkt. Vielmehr ist innerhalb des Erfindungsgedankens eine Vielzahl von Abwandlungen möglich, die im Rahmen fachmännischen Handelns liegen. Ebenso ist es möglich, durch Kombination der genannten Mittel und Merkmale weitere Ausführungsvarianten zu realisieren, ohne den Rahmen der Erfindung zu verlassen.
Vorrichtung nach einem der vorhergehenden Ansprüche, dadurch gekennzeichnet, **dass** die Aufgabeeinrichtung (5) einen in den Ofenschacht (3) mündenden Kanal (27) zur Einbringung oder Absaugung eines Prozessgases (28) in/aus dem Ofenschacht (3) umfasst.
Vorrichtung nach Anspruch 15, **dadurch gekennzeichnet, dass** der Kanal (27) in oder unterhalb der Umlenkeinrichtung (23) ausgebildet ist.
Vorrichtung nach Anspruch 15 oder 16, **dadurch gekennzeichnet, dass** die Einmündung des Kanals (27) in den Ofenschacht (3) in einem Bereich zwischen zwei durch die Aufgabeeinrichtung (5) definierten und einander gegenüberliegenden Fallstrecken (4) angeordnet ist.
Vorrichtung nach einem der Ansprüche 15 bis 17, **dadurch gekennzeichnet, dass** die Einmündung des Kanals (27) in den Ofenschacht (3) dem Zentrum des Ofenschachtquerschnitts näher ist als die zumindest eine spaltförmige Austrittsöffnung (7) oder die zumindest eine Austrittsöffnungsanordnung (8).
Vorrichtung nach einem der Ansprüche 15 bis 18, **dadurch gekennzeichnet, dass** eine Einmündung des Kanals (27) in den Ofenschacht (3) im Zentrumsbereich des Ofenschachtquerschnittes angeordnet ist.

Verfahren zur Herstellung eines geblähten Granulats aus sandkornförmigem, insbesondere mineralischem Material (1) mit einem Treibmittel, beispielsweise aus Perlit- oder Obsidiansand, wobei das Material (1) über eine Aufgabeeinrichtung (5) von oben in einen Ofen (2) mit einem im Wesentlichen vertikal verlaufenden Ofenschacht (3) eingebracht wird und entlang zumindest einer Fallstrecke (4) durch den Ofenschacht (3) fällt, wobei das Material (1) erhitzt und aufgrund des Treibmittels gebläht wird, **dadurch gekennzeichnet, dass** das sandkornförmige Material (1) durch die Aufgabeeinrichtung (5) in Form zumindest eines nach unten fallenden Vorhanges (25) in den oberen Bereich des Ofenschachtes (3) eingebracht wird, wobei die Fallstrecke (4) des Vorhanges (25) in einem dezentralen, vorzugsweise peripheren Bereich des Ofenschachtquerschnittes liegt.

Verfahren nach Anspruch 20, **dadurch gekennzeichnet, dass** die Fallstrecke (4) entlang einer Innenwand (11, 12) des Ofenschachtes (3) verläuft, wobei vorzugsweise der Abstand zwischen dem Vorhang (25) aus sandkornförmigem Material (1) und der Innenwand (11, 12) höchstens 30mm, besonders bevorzugt höchstens 20mm, beträgt.

Verfahren nach Anspruch 20 oder 21, **dadurch gekennzeichnet, dass** im oberen Bereich des Ofenschachtes (3) Prozessgas (28) eingebracht oder abgesaugt wird, wobei die Einbringung oder Absaugung des Prozessgases (28) in einem zentrumsnahen Bereich des Ofenschachtquerschnittes erfolgt.

Verfahren nach einem der Ansprüche 20 bis 22, **dadurch gekennzeichnet, dass** die Aufgabeeinrichtung (5) nach einem der Ansprüche 1 bis 19 ausgebildet ist.

## Patentansprüche

1. Vorrichtung (10) zur Herstellung eines geblähten Granulats aus sandkornförmigem Material (1), umfassend einen Ofen (2) mit einem im Wesentlichen vertikal verlaufenden Ofenschacht (3) und einer oberhalb oder im oberen Bereich des Ofenschachtes (3) angeordneten Aufgabeeinrichtung (5) zur Aufgabe des sandkornförmigen Materials (1) in den Ofenschacht (3), **dadurch gekennzeichnet, dass** die Aufgabeeinrichtung (5) ausgebildet ist, um das sandkornförmige Material (1) in Form zumindest eines nach unten fallenden Vorhanges (25) in den oberen Bereich des Ofenschachtes (3) einzubringen, wobei die Fallstrecke (4) des Vorhanges (25) in einem dezentralen, vorzugsweise peripheren Bereich des Ofenschachtquerschnittes liegt.

2. Vorrichtung nach Anspruch 1, **dadurch gekennzeichnet, dass** die Aufgabeeinrichtung (5) zumindest eine dem Ofenschacht (3) zugewandte spaltförmige Austrittsöffnung (7) und/oder zumindest eine dem Ofenschacht (3) zugewandte Austrittsöffnungsanordnung (8) aus mehreren entlang einer Linie nebeneinander angeordneten Austrittsöffnungen aufweist, um das sandkornförmige Material (1) in Form eines Vorhanges (25) in den Ofenschacht (3) zu entlassen.

3. Vorrichtung nach Anspruch 2, **dadurch gekennzeichnet, dass** die spaltförmige Austrittsöffnung (7) oder die Austrittsöffnungsanordnung (8) im Wesentlichen parallel zu zumindest einer Innenwand (11, 12) des Ofenschachtes (3) verläuft.

4. Vorrichtung nach Anspruch 2 oder 3, **dadurch gekennzeichnet, dass** die spaltförmige Austrittsöffnung (7) oder die Austrittsöffnungsanordnung (8) in Bezug zu einer Innenwand (11, 12) des Ofenschachtes (3) derart angeordnet ist, dass die Fallstrecke (4) des durch die spaltförmige Austrittsöffnung (7) oder die Austrittsöffnungsanordnung (8) geformten Vorhanges (25) in Innenwandnähe verläuft, wobei die Fallstrecke (4) des Vorhanges (25) vorzugsweise höchstens 30mm, besonders bevorzugt höchstens 20mm von der Innenwand (11, 12) des Ofenschachtes (3) entfernt, verläuft.

5. Vorrichtung nach einem der vorhergehenden Ansprüche, **dadurch gekennzeichnet, dass** die Aufgabeeinrichtung (5) zumindest eine Leitfläche (13, 14) für das sandkornförmige Material (1) umfasst, die schräg zur Vertikalen orientiert ist und in eine dem Ofenschacht (3) zugewandte Austrittsöffnung (7) oder Austrittsöffnungsanordnung (8) mündet, wobei vorzugsweise die Aufgabeeinrichtung (5) zumindest zwei Leitflächen (13, 14) umfasst, die das sandkornförmige Material (1) in entgegengesetzte Richtungen umlenken.

6. Vorrichtung nach einem der vorhergehenden Ansprüche, **dadurch gekennzeichnet, dass** die Aufgabeeinrichtung (5) eine erste Förderstrecke (16) mit einem Boden (17) aufweist, um das sandkornförmige Material (1) entlang einer ersten Förderrichtung (18) zu fördern, wobei der Boden (17) im Endbereich der ersten Förderstrecke (16) durch schräg oder gebogen zur ersten Förderrichtung (18) verlaufende und jeweils einen Überlauf bildende Ränder (19, 20) begrenzt ist, an denen das sandkornförmige Material (1) die erste Förderstrecke (16) jeweils als fallender Vorhang (24) nach unten verlässt.

7. Vorrichtung nach Anspruch 6, **dadurch gekennzeichnet, dass** sich die Bodenfläche im Endbereich der ersten Förderstrecke (16) in Förderrichtung (18) verjüngt, vorzugsweise spitz zuläuft.

8. Vorrichtung nach Anspruch 6, **dadurch gekennzeichnet, dass** der Boden (17) im Endbereich der ersten Förderstrecke (16) einen Einschnitt aufweist, der durch die den Überlauf bildenden Ränder (19, 20) begrenzt ist und vorzugsweise V-förmige Kontur aufweist.

9. Vorrichtung nach einem der Ansprüche 6 bis 8, **dadurch gekennzeichnet, dass** die erste Förderstrecke (16) als Rinne ausgebildet ist und/oder mit einem Vibrationsantrieb (21) verbunden ist.

10. Vorrichtung nach einem der Ansprüche 6 bis 9, **dadurch gekennzeichnet, dass** der ersten Förderstrecke (16) eine Dosiereinrichtung (22), insbesondere in Form eines Ventils, zur Dosierung der Zufuhr des sandkornförmigen Materials (1) vorgeschaltet ist.

11. Vorrichtung nach einem der Ansprüche 6 bis 10, **dadurch gekennzeichnet, dass** die Aufgabeeinrichtung (5) eine zweite Förderstrecke (26) aufweist, die unterhalb der ersten Förderstrecke (16) angeordnet ist und eine Umlenkeinrichtung (23) umfasst, um die Ebene zumindest eines der von den Rändern (19, 20) der ersten Förderstrecke (16) fallenden Vorhänge (24) zu drehen.

12. Vorrichtung nach Anspruch 11, **dadurch gekennzeichnet, dass** die Umlenkeinrichtung (23) zumindest eine Leitfläche (13, 14) ausbildet, die schräg zur Fallrichtung eines von den Rändern (19, 20) der ersten Förderstrecke (16) fallenden Vorhanges (24) orientiert ist.

13. Vorrichtung nach Anspruch 11 oder 12, **dadurch gekennzeichnet, dass** eine erste Leitfläche (13) der Umlenkeinrichtung (23) unterhalb eines ersten schräg verlaufenden Randes (19) der ersten Förderstrecke (16) angeordnet ist und in eine erste spaltförmige Austrittsöffnung (7) oder Austrittsöffnungsanordnung (8) mündet, und dass eine zweite Leitfläche (14) der Umlenkeinrichtung (23) unterhalb eines zweiten schräg verlaufenden Randes (20) der ersten Förderstrecke (16) angeordnet ist und in eine zweite spaltförmige Austrittsöffnung (7) oder Austrittsöffnungsanordnung (8) mündet.

14. Vorrichtung nach einem der vorhergehenden Ansprüche, **dadurch gekennzeichnet, dass** der Ofenschachtquerschnitt im Wesentlichen rechteckförmig ist und durch die Aufgabeeinrichtung (5) eine erste Fallstrecke (4) in Form eines Vorhanges (25) entlang einer ersten Innenwand (11) des Ofenschachtes (3) definiert ist und eine zweite Fallstrecke (4) in Form eines Vorhanges (25) entlang einer zweiten Innenwand (12) des Ofenschachtes (3) definiert ist, wobei vorzugsweise die erste Innenwand (11) und die zweite Innenwand (12) einander gegenüberliegen.
